# EUROPEAN PATENT APPLICATION

(11) **EP 1 643 715 A1**
(43) Date of publication of application: **05.04.2006**
(21) Application number: 05020949.3
(22) Date of filing: 26.09.2005
(51) Int. Cl.: H04L 29/06

(54) **Communications system, method and router for speeding up communication path changeover between communication terminals**

(30) Priority: 27.09.2004 JP 2004279895
(71) Applicant: NEC CORPORATION, Minato-ku, Tokyo 108-8001 (JP)
(72) Inventor: Takai, Kenichi NEC Corporation, Tokyo 108-8001 (JP); Horiike, Shoichiro NEC Access Technica Ltd., Kakegawa-shi Shizuoka 436-8501 (JP)
(74) Representative: von Samson-Himmelstjerna, Friedrich

(57) **Abstract**

A communications system has a relay station and a router connected to the relay station and a network, for allowing a communication terminal to send and receive IP packets through a virtual tunnel in a network. If a communication terminal that is newly connected to the relay station has performed communications with another relay station before the communication terminal is newly connected, then the relay station receives a pseudo address used by the other relay station through the router, and takes over the pseudo address as the address of a transmission port of a virtual tunnel.

## Description

### BACKGROUND OF THE INVENTION

### 1. Field of the Invention:

The present invention relates to a communications system, an information processing method, and a router for establishing a path between communication terminals in a network.

### 2. Description of the Related Art:

At present, various processes for controlling communications and connections over IP (Internet Protocol) networks are under study. Japanese laid-open patent publication No. 2000-224217, for example, discloses a communication process utilizing a virtual tunnel as one of such processes. A communication process utilizing a virtual tunnel for communications between mobile communication terminals will be described below.

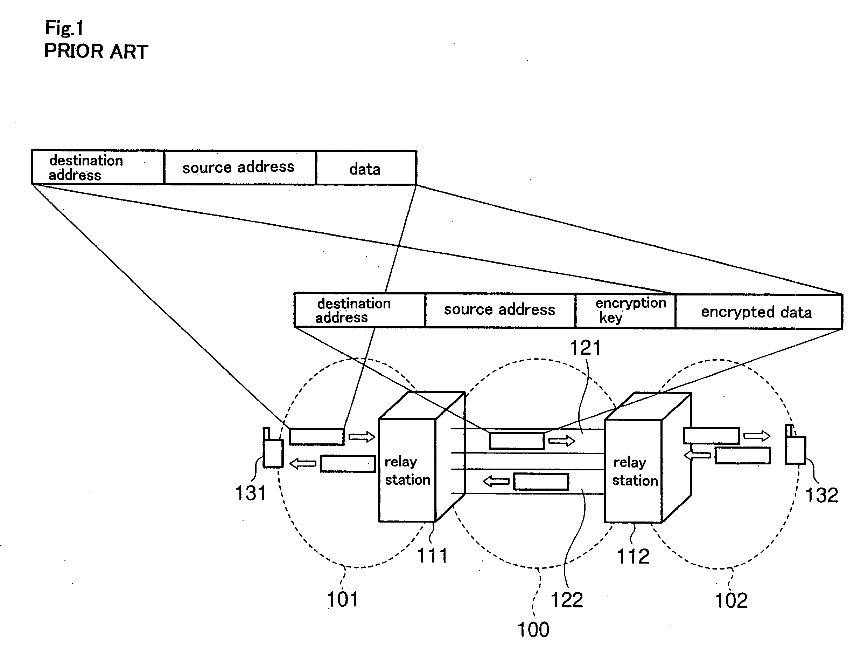

Fig. 1 of the accompanying drawings illustrates a conventional communication process utilizing a virtual tunnel.

As shown in Fig. 1, a communications system has relay stations 111, 112 for sending IP packets to and receiving IP packets from mobile communication terminals based on radio communications, and IP network 100. Though a plurality of routers for transferring IP packets are connected to IP network 100, those routers are omitted from illustration in Fig. 1. Relay station 111 covers area network 101 with mobile communication terminal 131 being present therein, and relay station 112 covers area network 102 with mobile communication terminal 132 being present therein.

Details of mobile communication terminals 131, 132 will be described below. Since mobile communication terminals 131, 132 are identical to each other, only details of mobile communication terminal 131 will be described below.

Mobile communication terminal 131 is a portable terminal that is capable of performing voice communications with mobile communication terminal 132. Mobile communication terminal 131 has a terminal communication unit for sending IP packets to and receiving IP packets from relay station 111 based on radio communications, a terminal memory for storing the addresses of its own terminal and companion terminals, and a terminal controller for controlling various parts of mobile communication terminal 131. When mobile communication terminal 131 enters area network 101 covered by relay station 111, mobile communication terminal 131 sends a positional information notice signal including the IP address of its own terminal for indicating the position of its own terminal, to relay station 111. When the positional information of mobile communication terminal 131 is registered in relay station 111, mobile communication terminal 131 is able to communicate with relay station 111 at any time. As shown in Fig. 1, mobile communication terminal 131 is connected to relay station 111 based on radio communications, and mobile communication terminal 132 is connected to relay station 112 based on radio communications.

When mobile communication terminal 131 is to send an IP packet to mobile communication terminal 132, the terminal controller thereof sets its own address as the source address and the address of the companion terminal as the destination address in the header information of the IP packet. The actual header information includes IP version information, packet length information, etc., in addition to the address information, according to the header format prescribed by IETF (Internet Engineering Task Force). However, for the sake of brevity, details of the other information than the address information will not be described below.

Details of relay stations 111, 112 will be described below. Since relay stations 111, 112 are identical to each other, only details of relay station 111 will be described below.

Relay station 111 is a server apparatus having a proxy server function and a radio communication function. When relay station 111 receives an IP packet whose header information includes a destination address representing a communication destination, relay station 111 reads the destination address from the header information and determines a path to the destination address. Then, relay station 111 exchanges address information with relay station 112 represented by the destination address, and stores the address of relay station 112. In this manner, two relay stations 111, 112 establish a virtual tunnel for transmitting IP packets therethrough. Two relay stations 111, 112 determine an encryption key for encrypting IP packets transmitted between the two relay stations 111, 112.

Fig. 1 shows virtual tunnel 121 for transmitting IP packets from mobile communication terminal 131 to mobile communication terminal 132, and virtual tunnel 122 for transmitting IP packets from mobile communication terminal 132 to mobile communication terminal 131.

Relay station 111 encloses an IP packet in another IP packet for transmitting the IP packets through virtual tunnel 121 to relay station 112. Enclosing an original IP packet in another packet is referred to as "encapsulation". An encapsulated IP packet will hereinafter be called "capsule packet".

For encapsulating an original IP packet, the information of the IP packet is encrypted according to an encryption key, so that the IP packet is converted into encrypted data. To the header information of the capsule packet, there are added the encryption key, the address of relay station 111 as the source, and the address of relay station 112 as the destination. When relay station 112 receives the capsule packet, relay station decrypts the encrypted data into the original IP packet using the encryption key of the header information, reads the destination address of the header information of the IP packet, and sends the IP packet to mobile communication terminal 132.

Though the capsule packet has long header information, the routers on the path through virtual tunnel 121 may only confirm that the destination address of the header information of the capsule packet represents relay station 112, and can ignore the IP packet destined for mobile communication terminal 132. Since the IP packet is transmitted as encrypted data, the IP packet is prevented from being peeped at or falsified while being transmitted, and hence the encryption of the IP packet is effective for greater security.

Operation of the communications system for transmitting an IP packet from mobile communication terminal 131 through relay stations 111, 112 to mobile communication terminal 132 will be described below.

When mobile communication terminal 131 sends an SIP (Session Initiation Protocol) message signal to request a connection to mobile communication terminal 132 to relay station 111, relay station 111 reads the IP address of mobile communication terminal 132 as the destination from the header information of the SIP message signal. Then, after having searched for a path to mobile communication terminal 132, relay station 111 confirms a path to relay station 112 according to a path search process, and sends an address request signal including its own address information to relay station 112.

When relay station 112 receives the address request signal from relay station 111, relay station 112 reads and stores the address of relay station 111, and sends an address reply signal including its own address information to relay station 111. When relay station 111 receives the address reply signal from relay station 112, relay station 111 stores the address of relay station 112 and sends an encryption key to relay station 112. In this manner, a virtual tunnel is established between relay station 111 and relay station 112.

Then, relay station 111 converts an IP packet of the SIP message signal received from mobile communication terminal 131 into encrypted data with the encryption key. Then, relay station 111 generates a capsule packet containing header information representative of the address of relay station 111 as the source, the address of relay station 112 as the destination, and the encryption key, and the encrypted data, and sends the capsule packet through virtual tunnel 121 to relay station 112.

When relay station 112 receives the capsule packet from relay station 111, relay station 112 decrypts the encrypted data into the original IP packet with the encryption key contained in the header information. Then, relay station 112 sends the IP packet from relay station 111 to mobile communication terminal 132 which is represented by the destination address contained in the header information of the IP packet.

When mobile communication terminal 132 is to send an IP packet to mobile communication terminal 131, the same process as described above is performed. When relay station 112 transmits a capsule packet to relay station 111, it uses a virtual tunnel 122 that is different from virtual tunnel 121. Relay station 112 uses an encryption key that is different from the encryption key contained in the capsule packet that is transmitted through virtual tunnel 121.

A communication process that is performed by the communications system when mobile communication terminal 132 moves into an area which is covered by a relay station that is different from relay station 112 will be described below.

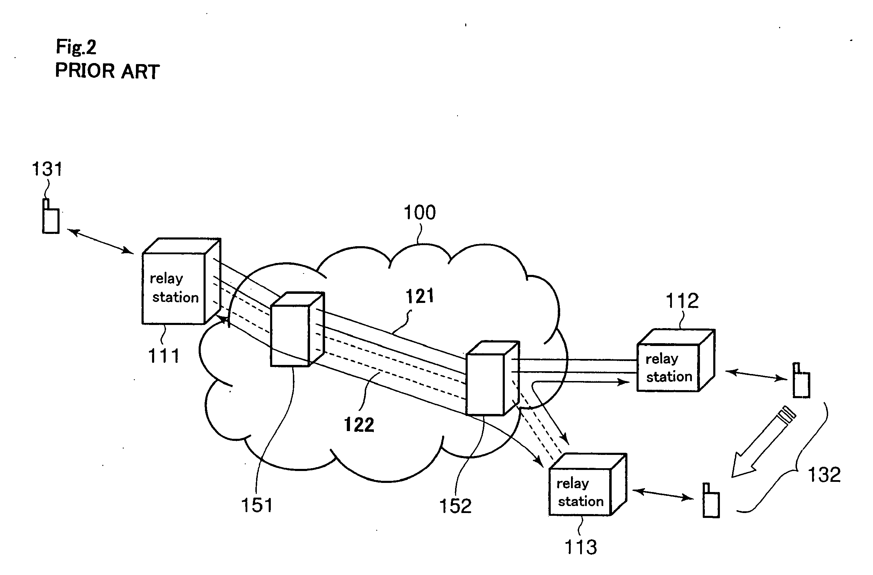

Fig. 2 of the accompanying drawings illustrates a conventional communication process that is performed when a mobile communication terminal moves into another area. Relay station 113 covers an area in which mobile communication terminal 132 is connected thereto when moved in. IP network 100 has routers 151, 152 for transferring received IP packets, routers 151, 152 being connected to the respective paths of virtual tunnels 121, 122. Router 151 is connected to relay station 111, and has a routing table in which the address of relay station 111 is registered. Router 152 is connected to relay station 112 and relay station 113, and has a routing table in which the addresses of relay stations 112, 113 are registered.

When mobile communication terminal 132 moves from the area of relay station 112 into the area of relay station 113, mobile communication terminal 132 sends a positional information notice signal to relay station 113. When relay station 113 receives the positional information notice signal from mobile communication terminal 132, relay station 113 notifies relay station 111 that mobile communication terminal 132 has moved into the area covered by relay station 113 and also notifies relay station 111 of its own address. When relay station 111 receives the notice from relay station 113, relay station 111 establishes a new virtual tunnel between itself and relay station 113.

An encryption key for encrypting IP packets is newly established between relay station 111 and relay station 113. When relay station 111 generates a capsule packet from an IP packet destined for mobile communication terminal 132, relay station 111 sets the destination address of the capsule packet to the address of relay station 113. Relay station 111 also erases virtual tunnels 121, 122 that have been established between itself and relay station 112.

Each time the mobile communication terminal as the destination moves to a different area covered by a different relay station, the relay station which serves as the source for sending a capsule packet needs to form a new virtual tunnel and change the destination address of the capsule packet to the address of the new relay station. When the communications of a plurality of mobile communication terminals are managed, therefore, the relay station as the source frequently changes destination addresses and the relay station as the destination frequently sends terminal movement notices to the relay station as the source.

If the distance by which the relay station as the source is physically spaced from the relay station as the destination is larger, then the switching time required when the mobile communication terminal moves between different areas is longer, making it difficult to perform high-speed switching required for voice communications.

In particular, as mobile communications networks become more and more IP-oriented, there will be a need for updating virtual tunnels at a high speed while sustaining communications. However, since the conventional communication processes are based on the assumption that communications are performed between fixed communication terminals, it is difficult to form a new virtual tunnel quickly and easily between a relay station covering an area to which a communication terminal moves to and a relay station covering an area in which a companion communication terminal is present.

New virtual tunnels are frequently formed and existing virtual tunnels are frequently erased between relay stations in an IP network. As a result, large burdens are imposed on nodes of the IP network, and become more serious as the IP network is greater in scale.

### SUMMARY OF THE INVENTION

It is an object of the present invention to provide a communications system, an information processing method, and a router which are capable of forming a new virtual tunnel more quickly and easily than heretofore even when a communication terminal moves and is connected to a different relay station.

A communications system according to the present invention has a relay station and a router connected to the relay station and a network, for allowing a communication terminal to send and receive IP packets through a virtual tunnel in a network.

When a relay station receives information of an IP address of the communication terminal from the communication terminal which is connected to the relay station, the relay station sends a tunnel information request signal including the IP address of the communication terminal and seeking information of a pseudo address which serves as the address of a transmission port of the virtual tunnel. When the relay station receives a tunnel information reply signal including the information of the pseudo address, the relay station stores the pseudo address together with the IP address of the communication terminal. When the relay station does not receive a tunnel information reply signal, the relay station generates a pseudo address and stores the pseudo address together with the IP address of the communication terminal.

A router transfers the tunnel information request signal received from the relay station. When the router receives a tunnel information reply signal from an external source, the router transfers the tunnel information reply signal to the relay station and stores a pseudo address contained in the tunnel information reply signal as the address of the relay station.

A method of processing information according to the present invention is performed by a communications system having a relay station and a router connected to the relay station, for changing a transmission port of a virtual tunnel in a network for allowing a communication terminal to send and receive IP packets therethrough. The method of processing information comprises the steps of, when the relay station receives information of an IP address of the communication terminal from the communication terminal which is connected to the relay station, sending a tunnel information request signal including the IP address of the communication terminal and seeking information of a pseudo address which serves as the address of the transmission port of the virtual tunnel, transferring the tunnel information request signal received from the relay station and when the router receives a tunnel information reply signal containing information of the pseudo address, transferring the tunnel information reply signal to the relay station and storing a pseudo address contained in the tunnel information reply signal as the address of the relay station, and, when the relay station receives the tunnel information reply signal, storing the pseudo address together with the IP address of the communication terminal, and, when the relay station does not receive a tunnel information reply signal, generating a pseudo address and storing the pseudo address together with the IP address of the communication terminal.

A router according to the present invention is connected to two relay stations, for changing a transmission port of a virtual tunnel provided to transmit an IP packet. The router comprises a memory for storing a table describing a pseudo address serving as an address to receive the IP packet through the virtual tunnel, as the address of one of the two relay stations, and a controller for, when a signal to change the pseudo address of the one of the two relay stations to a pseudo address of the other of the two relay stations is received from an external source, describing the pseudo address as the address of the other of the two relay stations in the table, and erasing the pseudo address described as the address of the one of the two relay stations.

According to the present invention, if a communication terminal that is newly connected to a relay station has performed communications with another relay station before the communication terminal is newly connected, then the relay station receives a pseudo address used by the other relay station through a router, and takes over the pseudo address as the address of a transmission port of a virtual tunnel. Therefore, the relay station does not need to establish a new pseudo address for the communication terminal. Since the transmission port of the virtual tunnel that has already been formed may only be changed from the previous relay station to the relay station to which the communication terminal is newly connected, the virtual tunnel does not need to be newly formed in its entirety. Accordingly, the transmission port of the virtual tunnel can quickly be switched as the communication terminal moves. If the communication terminal has not been previously be connected to any relay stations, then the relay station generates a pseudo address and serves as a transmission port of a virtual tunnel that is used for communications with the communication terminals.

The above and other objects, features, and advantages of the present invention will become apparent from the following description with reference to the accompanying drawings which illustrate an example of the present invention.

### BRIEF DESCRIPTION OF THE DRAWINGS

Fig. 1 is a diagram which illustrates a conventional communication process;
Fig. 2 is a diagram which illustrates a conventional communication process that is performed when a mobile communication terminal moves into another area;
Fig. 3 is a block diagram of a communications system according to an embodiment of the present invention;
Fig. 4 is a block diagram of a relay station of the communications system according to the embodiment of the present invention;
Fig. 5 is a block diagram of a router of the communications system according to the embodiment of the present invention;
Fig. 6 is a diagram which illustrates a communication procedure of the communications system according to the embodiment of the present invention;
Fig. 7 is a diagram which illustrates a communication procedure of the communications system according to the embodiment of the present invention after a mobile communication terminal has moved to another area; and
FIG. 8 is a flowchart of the communication procedure of the communications system according to the embodiment of the present invention after the mobile communication terminal has moved to another area.

### DETAILED DESCRIPTION OF THE PREFERRED EMBODIMENT

A communications system according to an embodiment of the present invention resides in that the address for use with a virtual tunnel of a relay station to which a communication terminal is connected before it moves is taken over by a relay station to which the communication terminal is connected after it has moved, and as the communication terminal moves, a router updates address information to change the destination to which an IP packet is to be transferred.

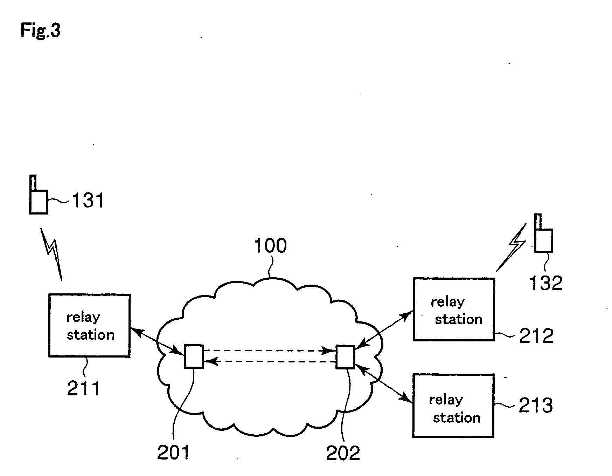

An arrangement of the communications system according to the embodiment of the present invention will be described below. Fig. 3 shows in block form the communications system according to the embodiment of the present invention. Those parts of the communications system shown in Fig. 3 which are identical to those of the conventional communications system are denoted by identical reference numerals, and will not be described in detail below.

As shown in Fig. 3, the communications system according to the embodiment of the present invention has relay stations 211, 212, 213, IP network 100 through which relay stations 211, 212, 213 can be connected to each other, and routers 201, 202 for connecting relay stations 211, 212, 213 and other relay stations through IP network 100. Routers 201, 202 are disposed on the path of a virtual tunnel formed between relay station 211 and relay station 212. Router 201 is connected to relay station 211, and router 202 is connected to relay station 212 and relay station 213. Mobile communication terminal 131 and mobile communication terminal 132 for performing IP packet communications with each other are connected respectively to relay station 211 and relay station 212.

Details of relay stations 211, 212, 213 will be described below. Since relay stations 211, 212, 213 are identical to each other, only details of relay station 211 will be described below.

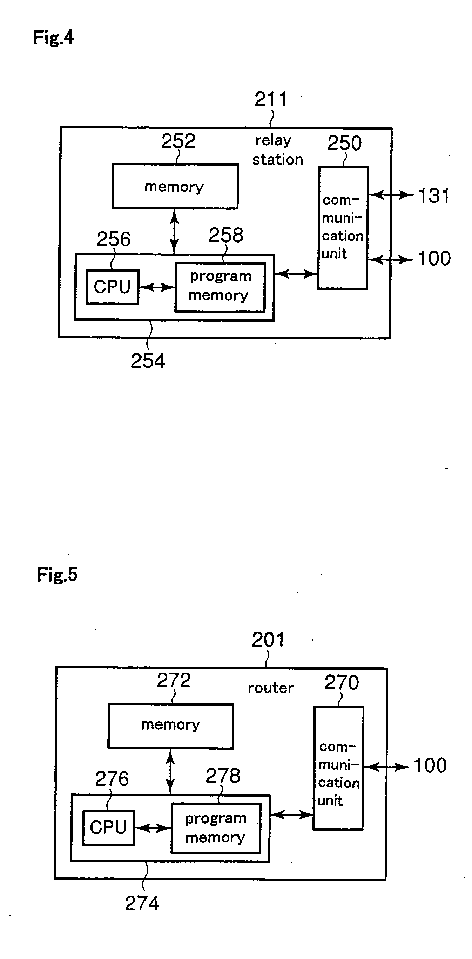

Fig. 4 shows relay station 211 in block form.

Relay station 211 has a proxy server function. Relay station 211 has communication unit 250 for sending IP packets to and receiving IP packets from mobile communication terminal 131, memory 252 for temporarily storing received packets, and controller 254 for acting for mobile communication terminal 131. Controller 254 has CPU (Central Processing Unit) 256 for performing a predetermined process according to a program and program memory 258 which stores the program.

When controller 254 receives an SIP message signal from a mobile communication terminal, controller 254 establishes a virtual tunnel in the same manner as heretofore. At this time, controller 254 generates a pseudo address which is different from the IP address of relay station 211, but is an address for receiving capsule packets through the virtual tunnel, and an encryption key for encrypting an IP packet including an SIP message. Different pseudo addresses are generated for respective mobile communication terminals that are connected to relay station 211. Controller 254 stores the pseudo address and the encryption key, together with the IP address of the mobile communication terminal, into memory 252. Controller 254 exchanges the information of pseudo addresses with relay station 212 which serves as another inlet/outlet port of the virtual tunnel.

When relay station 211 receives a positional information notice signal from a mobile communication terminal which is present in its own area, controller 254 registers the IP address of the mobile communication terminal in memory 252. Then, controller 254 sends a tunnel information request signal seeking a pseudo address and an encryption key used for communications with the mobile communication terminal and including the IP address of the mobile communication terminal, to router 201 closest to relay station 211. Thereafter, when controller 254 receives a tunnel information reply signal including the pseudo address and the encryption key through router 201, controller 254 stores the pseudo address and the encryption key, together with the IP address of the mobile communication terminal, into memory 252.

If controller 254 receives no tunnel information reply signal, then controller 254 only recognizes that the mobile communication terminal has not performed communications in an area from which the mobile communication terminal has moved, and does nothing. A process to be carried out when a newly connected mobile communication terminal starts communicating with another mobile communication terminal will be described later.

When relay station 211 receives a tunnel information request signal through router 201, relay station 211 looks for an IP address which is in conformity with the IP address of the mobile communication terminal that is contained in the tunnel information request signal. If such an IP address is found, then relay station 211 reads a pseudo address and an encryption key stored with the IP address in memory 252, and sends a tunnel information reply signal through router 201 to a relay station which has sent the tunnel information request signal.

Details of routers 201, 202 will be described below. Since routers 201, 202 are identical to each other, only details of router 201 will be described below.

Fig. 5 shows router 201 in block form. As shown in Fig. 5, router 201 has communication unit 270 for sending and receiving IP packets, memory 272 for temporarily storing received IP packets, and controller 274 for transferring IP packets according to the header information of received IP packets. Controller 274 has CPU 276 for performing a predetermined process according to a program and program memory 278 which stores the program.

Router 201 has a routing table stored in memory 272 for determining a destination for a received IP packet. When controller 274 of router 201 receives a registration request signal for requesting the registration of a pseudo address from relay station 211, controller 274 registers a pseudo address as the address of relay station 211 in the routing table. When router 202 receives registration request signals from respective relay stations 212, 213, router 202 registers respective pseudo addresses as the addresses of relay stations 212, 213 in the routing table, as with router 201.

When controller 274 of router 201 receives a tunnel information request signal from relay station 211, controller 274 transfers the tunnel information request signal to relay stations, except relay station 211, which are connected to router 201. Thereafter, when controller 274 receives a tunnel information reply signal from either one of the relay stations that are connected to IP network 100, controller 274 reads the information of a pseudo address from the tunnel information reply signal, registers the pseudo address as the address of relay station 211 in the routing table, and erases a pseudo address, which is identical to that pseudo address, that has been registered as the address of another relay station. Controller 274 also transfers the received tunnel information reply signal to relay station 211.

A communication procedure of the communications system for performing communications between mobile communication terminal 131 and mobile communication terminal 132 through a virtual tunnel will be described below.

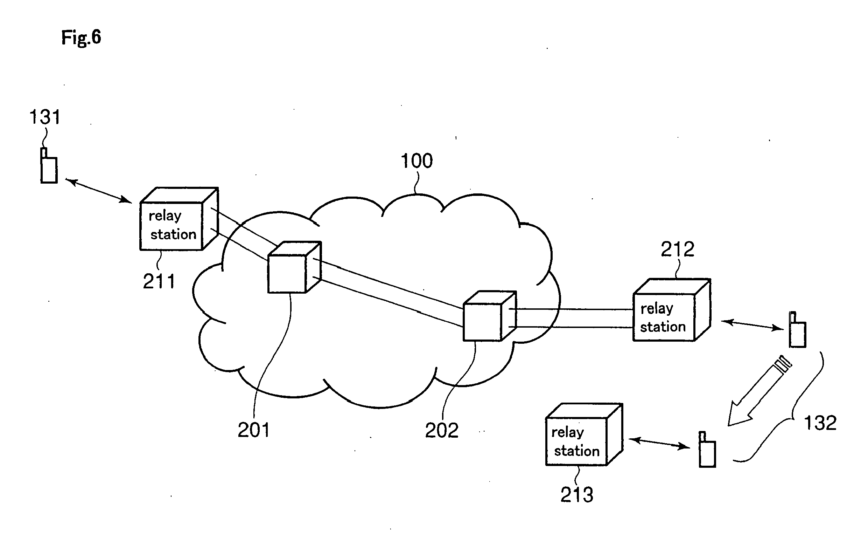

Fig. 6 shows such a communication procedure of the communications system.

When mobile communication terminal 131 sends an SIP message signal to request a connection to mobile communication terminal 132 to relay station 211, relay station 211 reads the IP address of mobile communication terminal 132 as the destination from the header information of the SIP message signal. Then, after having searched for a path to mobile communication terminal 132, relay station 211 confirms a path to relay station 212 according to a path search process. At this time, relay station 211 generates a pseudo address "address X" for use with mobile communication terminal 131, and sends an address request signal including the information of the pseudo address "address X" through router 201 and the virtual tunnel to relay station 212 in order to seek the address information of relay station 212.

When relay station 212 receives the address request signal from relay station 211, relay station 212 reads and stores the pseudo address "address X" of relay station 211, generates a pseudo address "address A" for use with mobile communication terminal 132, and sends an address reply signal including the information of the pseudo address "address A" through router 202 and the virtual tunnel to relay station 211. When relay station 211 receives the address reply signal from relay station 212, relay station 211 stores the pseudo address of relay station 212, and establishes an encryption key for use between itself and relay station 212. In this manner, the virtual tunnel is established on the path between relay station 211 and relay station 212.

When router 201 transfers the address request signal received from relay station 211 to relay station 212, router 201 describes the pseudo address "address X" as the address of relay station 211 in the routing table according to the received address request signal. When router 202 transfers the address reply signal received from relay station 212 to relay station 211, router 202 describes the pseudo address "address A" as the address of relay station 212 in the routing table according to the received address reply signal.

Then, relay station 211 generates a capsule packet enclosing encrypted data generated from the SIP message signal which has been received from mobile communication terminal 131. Relay station 211 sets the pseudo address "address X" of relay station 211 as the source address in the header information of the capsule packet, sets the pseudo address "address A" of relay station 212 as the destination address in the header information of the capsule packet, and adds the encryption key to the capsule packet. Then, relay station 211 sends the capsule packet through router 201 and the virtual tunnel to router 202.

When router 202 receives the capsule packet from router 201, router 202 reads the destination address from the header information of the capsule packet, and confirms that the pseudo address "address A" of relay station 212 is described as the destination address. Then, router 202 sends the capsule packet to relay station 212. When relay station 212 receives the capsule packet from router 202, relay station 212 decrypts the encrypted data into the IP packet using the encryption key of the capsule packet, and sends the IP packet of the SIP message signal to mobile communication terminal 132.

A communication procedure for mobile communication terminal 132 to send an IP packet to mobile communication terminal 131 after having thus established a connection through the virtual tunnel will be described below.

When mobile communication terminal 132 sends an IP packet destined for mobile communication terminal 131 to relay station 212, relay station 212 encrypts the IP packet received from mobile communication terminal 132 into encrypted data, and generates a capsule packet. Then, relay station 212 sets a pseudo address "address X" as the destination address in the header information, sets a pseudo address "address A" as the source address in the header information, and adds the encryption key to the capsule packet. Then, relay station 212 sends the capsule packet through the virtual tunnel to router 201.

When router 201 receives the capsule packet from router 202, router 201 reads the destination address from the header information of the capsule packet, and confirms that the pseudo address "address X" is described as the destination address. Then, router 201 sends the capsule packet to relay station 211. When relay station 211 receives the capsule packet from router 201, relay station 211 decrypts the capsule packet into the IP packet using the encryption key, and sends the IP packet to mobile communication terminal 131. Subsequently, IP packets are sent and received between mobile communication terminal 131 and mobile communication terminal 132 in the manner described above.

A communication procedure that is carried out when mobile communication terminal 132 moves into an area covered by relay station 213 while IP packets are being sent and received between mobile communication terminal 131 and mobile communication terminal 132 will be described below.

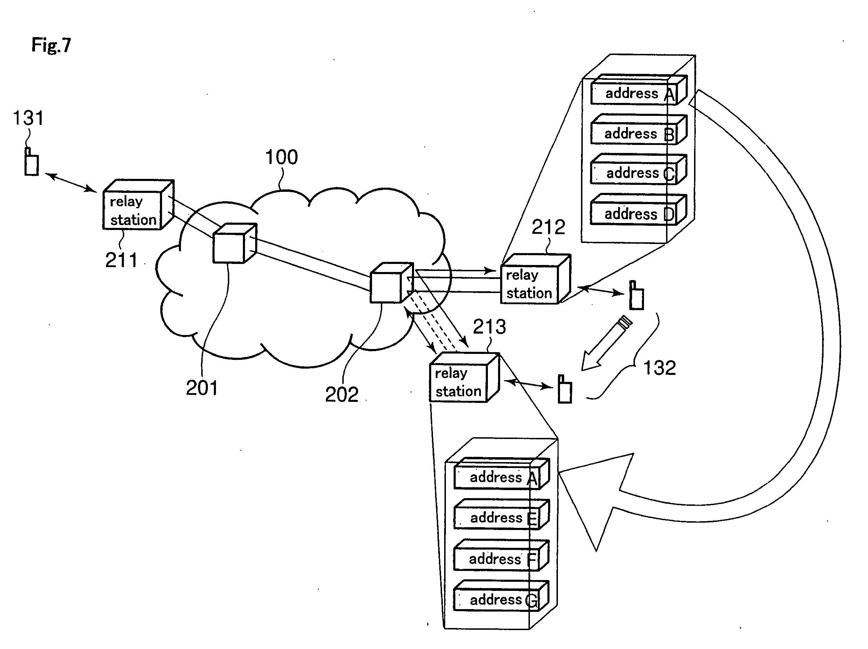

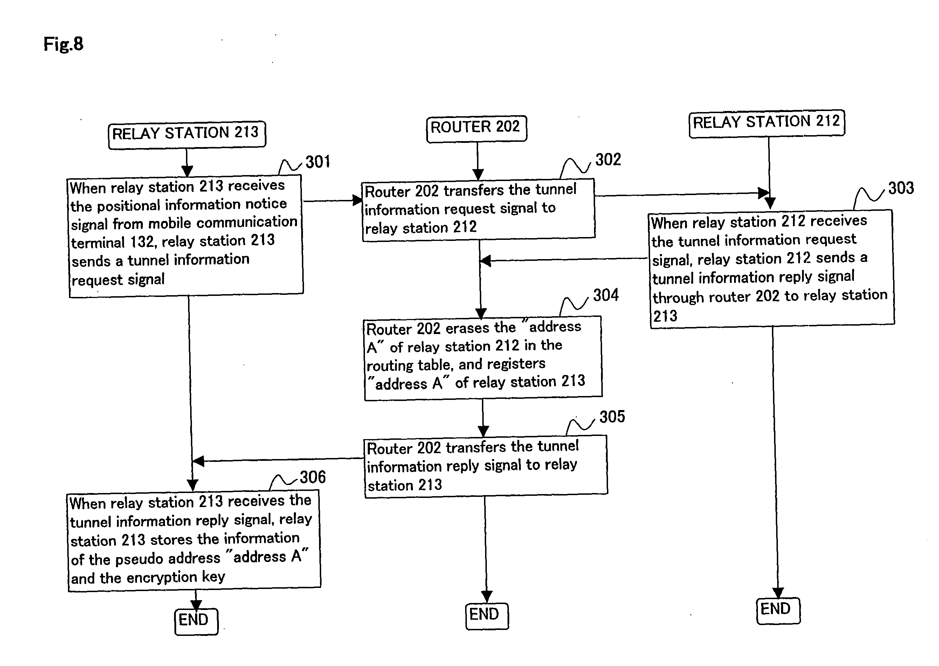

Fig. 7 illustrates a communication procedure of the communications system after a mobile communication terminal has moved to another area. Fig. 8 shows a flowchart of the communication procedure of the communications system after the mobile communication terminal has moved to another area.

When mobile communication terminal 132 moves from the area covered by relay station 212 to the area covered by relay station 213, mobile communication terminal 132 sends a positional information notice signal to relay station 213. When relay station 213 receives the positional information notice signal from mobile communication terminal 132, relay station 213 recognizes that mobile communication terminal 132 has moved into the area covered thereby, and stores the IP address of mobile communication terminal 132 into memory 252. Then, relay station 213 sends a tunnel information request signal seeking a pseudo address and an encryption key and including the IP address of mobile communication terminal 132, to router 202 in order to determine the pseudo address and the encryption key of the relay station from which mobile communication terminal 132 has moved (step 301).

When router 202 receives the tunnel information request signal from relay station 213, router 202 transfers the tunnel information request signal to relay stations, except relay station 213, which are connected to router 202. In the illustrated embodiment, router 202 transfers the tunnel information request signal to relay station 212 (step 302).

When relay station 212 receives the tunnel information request signal from router 202, relay station 202 looks for an IP address which is identical to the IP address of the mobile communication terminal that is contained in the tunnel information request signal, within memory 252. If such an IP address is found, then relay station 212 reads a pseudo address "address A" and an encryption key stored with the IP address in memory 252, and sends a tunnel information reply signal including the information of the pseudo address "address A" and the encryption key through router 202 to relay station 213 (step 303). When router 202 receives the tunnel information reply signal from relay station 212, router 202 erases the pseudo address "address A" from the address information of relay station 212 in the routing table, and registers the pseudo address "address A" as the address information of relay station 213 (step 304). Router 202 also transfers the tunnel information reply signal to relay station 213 (step 305).

When relay station 213 receives the tunnel information reply signal from router 202, relay station 213 stores the information of the pseudo address "address A" and the encryption key together with the IP address into memory 252 (step 306).

Thereafter, when mobile communication terminal 131 sends an IP packet destined for mobile communication terminal 132 to relay station 211, relay station 211 generates a capsule packet containing encrypted data generated from the IP packet. Relay station 211 sets the pseudo address "address X" as the source address in the header information of the capsule packet, sets the pseudo address "address A" as the destination address in the header information of the capsule packet, and adds the encryption key to the capsule packet. Then, relay station 211 sends the capsule packet through router 201 and the virtual tunnel to router 202.

When router 202 receives the capsule packet from relay station 211, router 202 reads the destination address from the header information of the capsule packet. If router 202 recognizes that the pseudo address "address A" is described as the destination address, then router 202 refers to the routing table and sends the capsule packet to relay station 213.

When relay station 213 receives the capsule packet from router 202, relay station 213 decrypts the encrypted data into the IP packet using the encryption key of the capsule packet, and sends the IP packet to mobile communication terminal 132.

If a mobile communication terminal has not previously been connected to any relay station, then the relay station generates a pseudo address for the mobile communication terminal to be connected, and stores the generated pseudo address into memory 252. In this manner, the relay station serves as a transmission port of a virtual tunnel that is used for communications with the mobile communication terminal. In Fig. 7, relay station 212 stores the information of pseudo addresses "address A", "address B", "address C", and "address D" for respective four mobile communication terminals, and relay station 213 stores the information of pseudo addresses "address E", "address F", and "address G" for respective three mobile communication terminals.

According to the present invention, as described above, if mobile communication terminal 132 moves and is connected to relay station 213 after the virtual tunnel with relay station 212 serving as the transmission port thereof has been formed, the pseudo address of the transmission port of the virtual tunnel is taken over from relay station 212 to relay station 213 to which mobile communication terminal 132 is connected after being moved. Therefore, relay station 213 is not required to establish a new pseudo address. Since the transmission port of the virtual tunnel may only be changed from relay station 212 to relay station 213, it is not necessary to form a virtual tunnel for renewing the entire path interconnecting relay station 211 and relay station 213. Even though the transmission port of the virtual tunnel is changed from relay station 212 to relay station 213, relay station 211 does not need to change the address of the destination of the capsule packet. As the information of the encryption key is taken over from relay station 212 to relay station 213, it is not necessary to establish a new encryption key for use between relay station 211 and relay station 213. Therefore, it is possible to switch one of the transmission ports of the virtual tunnel from relay station 212 to relay station 213 more quickly than heretofore as mobile communication terminal 132 moves.

A plurality of mobile communication terminals for sending IP packets and receiving IP packets from relay station 211 may be connected to relay station 212, and may be moved to change their connections to relay station 213 and other relay stations. Even in this case, relay station 212 is not required to change the destination address of the capsule packet depending on the mobile communication terminal, and does not receive a notice indicating that the mobile communication terminal has moved from a relay station to which the mobile communication terminal has moved. Therefore, the amount of processing performed by relay station as the mobile communication terminal moves is reduced.

Even when the mobile communication terminal moves, it is not necessary to form a new virtual tunnel and erase an existing virtual tunnel between relay stations in IP network 100. Consequently, burdens imposed on nodes of the IP network are smaller than heretofore.

According to the illustrated embodiment, each of the mobile communication terminals comprises a portable terminal. However, each of the mobile communication terminals may comprise a fixed communication terminal such as a desktop personal computer.

When mobile communication terminal 132 stores tunnel information including a pseudo address and an encryption key and sends a positional information notice signal to relay station 213 to which mobile communication terminal 132 moves, mobile communication terminal 132 may send the tunnel information to relay station 213. In this case, relay station 213 sends information for updating the pseudo address to router 202.

When a relay station is connected to a mobile communication terminal, the relay station may share the information of the mobile communication terminal with another relay station that is connected to a router which is closest to the relay station. In this case, if relay station 212 is connected mobile communication terminal 132, relay station 212 sends shared information indicating that relay station 212 is connected mobile communication terminal 132 and including the information of the address of mobile communication terminal 132 to router 202. When router 202 receives the shared information from relay station 212, router 202 transfers the shared information to relay station 213, which stores the shared information received from router 202. Relay station 213 recognizes from the shared information that mobile communication terminal 132 has been connected to relay station 212, and can ask relay station 212 through router 202 for the information of the pseudo address and the encryption key.

While a preferred embodiment of the present invention has been described using specific terms, such description is for illustrative purposes only, and it is to be understood that changes and variations may be made without departing from the spirit or scope of the following claims.

## Claims

1. A communications system for allowing a communication terminal to send and receive IP packets through a virtual tunnel in a network, comprising:
a relay station for, when information of an IP address of said communication terminal is received from the communication terminal which is connected to said relay station, sending a tunnel information request signal including the IP address of said communication terminal and seeking information of a pseudo address which serves as an address of a transmission port of said virtual tunnel, and for, when a tunnel information reply signal including the information of the pseudo address is received, storing said pseudo address together with the IP address of said communication terminal, and for, when said tunnel information reply signal is not received, generating a pseudo address and storing the pseudo address together with the IP address of said communication terminal; and
a router connected to said relay station and said network, for transferring said tunnel information request signal received from said relay station, and for, when said tunnel information reply signal is received from an external source, transferring said tunnel information reply signal to said relay station and storing said pseudo address contained in said tunnel information reply signal as the address of the relay station.

2. A communications system according to claim 1, wherein said relay station receives said tunnel information request signal, and, if said relay station stores an IP address which is in conformity with the IP address of said communication terminal contained in said tunnel information request signal, sends said tunnel information reply signal.

3. A communications system according to claim 1, wherein when said relay station generates said pseudo address, said relay station generates an encryption key for encrypting said IP packet, and said relay station sends said tunnel information reply signal with information of said encryption key added thereto.

4. A method of processing information with a communications system having a relay station and a router connected to the relay station, for changing a transmission port of a virtual tunnel in a network for allowing a communication terminal to send and receive IP packets therethrough, comprising the steps of:
when said relay station receives information of an IP address of said communication terminal from said communication terminal which is connected to said relay station, sending a tunnel information request signal including the IP address of said communication terminal and seeking information of a pseudo address which serves as an address of said transmission port of said virtual tunnel;
transferring said tunnel information request signal received from said relay station with said router and when said router receives a tunnel information reply signal containing information of said pseudo address, transferring said tunnel information reply signal to said relay station and storing a pseudo address contained in said tunnel information reply signal as an address of said relay station; and
when said relay station receives said tunnel information reply signal, storing said pseudo address together with the IP address of said communication terminal, and, when said relay station does not receive said tunnel information reply signal, generating a pseudo address and storing the pseudo address together with the IP address of said communication terminal.

5. A method according to claim 4, further comprising the steps of:
receiving said tunnel information request signal with said relay station; and
if said relay station stores an IP address which is in conformity with the IP address of said communication terminal contained in said tunnel information request signal, sending said tunnel information reply signal from said relay station.

6. A method according to claim 4, further comprising the steps of:
when said relay station generates said pseudo address, generating an encryption key for encrypting said IP packet with said relay station; and
sending said tunnel information reply signal with information of said encryption key added thereto from said relay station.

7. A router connected to two relay stations, for changing a transmission port of a virtual tunnel provided to transmit an IP packet, comprising:
a memory for storing a table describing a pseudo address serving as an address to receive said IP packet through said virtual tunnel, as an address of one of the two relay stations; and
a controller for, when a signal to change the pseudo address of said one of the two relay stations to a pseudo address of the other of the two relay stations is received from an external source, describing said pseudo address as the address of the other of the two relay stations in said table, and erasing the pseudo address described as the address of said one of the two relay stations.
